(19) Europäisches Patentamt / European Patent Office / Office européen des brevets

(11) **EP 4 102 459 A1**

(12) **EUROPEAN PATENT APPLICATION**
published in accordance with Art. 153(4) EPC

(43) Date of publication:
**14.12.2022 Bulletin 2022/50**

(51) International Patent Classification (IPC):
$G06T\ 7/20$ (2017.01)    $G06T\ 7/70$ (2017.01)
$G06T\ 7/50$ (2017.01)    $H04N\ 5/232$ (2006.01)
$G06K\ 9/00$ (2022.01)

(21) Application number: **21750214.5**

(22) Date of filing: **03.02.2021**

(86) International application number:
**PCT/KR2021/001411**

(87) International publication number:
**WO 2021/158009 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.02.2020 KR 20200014356**

(71) Applicant: **Daegu Gyeongbuk Institute Of Science and Technology**
**Daegu 42988 (KR)**

(72) Inventor: **LEE, Sang Cheol**
**Daegu 42764 (KR)**

(74) Representative: **AWA Sweden AB**
**Box 5117**
**200 71 Malmö (SE)**

(54) **TRACKING DEVICE, TRACKING SYSTEM INCLUDING SAME, AND TRACKING METHOD FOR TRACKING DEVICE**

(57)   The present invention provides a tracking device, a tracking system including same, and a tracking method. The present invention relates to a tracking device for tracking a moving target object, the tracking device comprising: a driving module for moving a body; a positioning module, which is provided in the body and measures the distance between the target object and the tracking device; an imaging module for photographing the target object or the surrounding environment while moving; a sensor module for sensing the front of the body so as to sense a moving object between the target object and the body; and a controller, which receives data from the positioning module, the imaging module, and the sensor module so as to set the path of the driving module and control the driving.

FIG. 1

## Description

[Technical Field]

The present invention relates to a tracking device for tracking a target object, a tracking system including the same, and a tracking method for the tracking device.

[Background Art]

Recently, location-based service (LBS) technology based on location information has been used in various ways. As a representative example thereof, a navigation device has been widely used to receive a GPS signal, etc. to measure a current location of a user or guide a user along a movement route to a destination.

However, while positioning technology based on GPS, etc. as described above is easy for positioning outdoors where GPS satellite signals can be smoothly received, the positioning technology has a problem in an indoor environment, in which it is difficult to receive GPS satellite signals or signal distortion may occur, in that positioning is impossible or positioning accuracy is lowered.

In contrast, in a conventionally used technology, positioning nodes for positioning are installed in a plurality of locations indoors, and a distance from a target node located in an inner region of the plurality of positioning nodes to each of the positioning nodes is measured to calculate a location of the target node.

However, in such a case, there is a restriction that the location of the target node can be determined only when a plurality of positioning nodes is installed in advance to cover the entire region for positioning.

In this regard, it is preferable to position the target node by using a moving object equipped with the positioning node, etc. However, in this case, there may be problems in that an operation for calculating the location of the target node becomes significantly complicated, and positioning accuracy of the target node deteriorates.

Accordingly, there is a demand for a method capable of positioning the target node without installing the plurality of positioning nodes in advance in the region for positioning, preventing an operation for calculating the location of the target node from becoming complicated, and positioning the target node with high accuracy. However, there has yet to be provided a specific method capable of adequately addressing such a demand.

In addition, driving of the tracking device needs to be adjusted according to the situation. For example, when a route needs to be changed due to a surrounding obstacle during tracking, or when a moving object is observed during tracking, a safety risk occurs.

[Disclosure]

[Technical Problem]

Therefore, the present invention has been made in view of the above problems, and it is an object of the present invention to provide a tracking device capable of accurately positioning a target object and actively coping with an environment occurring during tracking, a tracking system including the same, and a tracking method for the tracking device. However, these problems are exemplary, and the scope of the present invention is not limited thereto.

[Technical Solution]

In accordance with an aspect of the present invention, the above and other objects can be accomplished by the provision of a tracking device for tracking a moving target object, including a driving module configured to move a main body, a positioning module installed on the main body and configured to measure a distance between the target object and the tracking device, an imaging module configured to capture an image of the target object or a surrounding environment while moving, a sensor module configured to sense an area in front of the main body and to sense a moving object between the target object and the main body, and a controller configured to receive data from the positioning module, the imaging module, and the sensor module, set a route of the driving module, and control driving.

When the imaging module captures an image of an obstacle between the target object and the main body, the controller may modify a preset first route to drive the driving module along a second route for avoiding the obstacle.

When the obstacle is removed from data measured by the imaging module, the controller may drive the driving module along the first route again.

The controller may drive the driving module along a first route set based on data measured by the positioning module, and stop the driving module when the sensor module senses the moving object.

When the moving object is removed from data measured by the sensor module, the controller may drive the driving module along the first route again.

The controller may drive the driving module along a first route such that a distance between the target object and the tracking device is maintained constant based on data measured by the positioning module, drive the driving module along a route different from the first route based on information related to an obstacle received from the imaging module or information related to a moving object received from the sensor module, and drive the driving module along the first route again when the obstacle or the moving object is removed.

The positioning module may include a plurality of positioning nodes, and each of the positioning nodes may measure a distance from a target node mounted on the target object.

The controller may receive data related to a distance from the target node from the positioning nodes having a triangular arrangement and calculate location information of the target node.

The positioning nodes may be arranged such that distances between at least two neighboring positioning nodes are equal to each other.

Three positioning nodes may have an arrangement of a right-angled isosceles triangle.

In accordance with another aspect of the present invention, there is provided a tracking system including a target object having a target node, and a tracking device configured to track the target object, in which the tracking device includes a driving module configured to move a main body, a positioning module installed on the main body and configured to measure a distance between the target object and the tracking device, an imaging module configured to capture an image of the target object or a surrounding environment while moving, a sensor module configured to sense an area in front of the main body and sense to a moving object between the target object and the main body, and a controller configured to receive data from the positioning module, the imaging module, and the sensor module, set a route of the driving module, and control driving.

In accordance with a further aspect of the present invention, there is provided a tracking method for a tracking device including a step of measuring a distance between a target object and the tracking device by a positioning module and moving the tracking device along a first route set by a controller, a step of setting, by the controller, a second route for avoiding an obstacle by modifying the first route when an imaging module senses the obstacle between the target object and the tracking device, a step of moving the tracking device along the second route by the controller, and a step of moving, by the controller, the tracking device along the first route again when the obstacle is removed from data measured by the imaging module.

The tracking method may further include a step of stopping the tracking device by the controller when the sensor module senses a moving object between the target object and the tracking device, and a step of moving, by the controller, the tracking device along the first route again when the moving object is removed from data measured by the sensor module.

The step of moving the tracking device along the first route includes a step in which a plurality of positioning nodes of the positioning module is disposed in a triangular arrangement, and a distance between each of the positioning nodes and the target node of the target object is measured, a step of calculating location information of the target node based on data related to a distance between the positioning node and the target node, and a step of setting the first route such that a distance between the target object and the tracking device is maintained constant based on location information of the tracking device and location information of the target object.

Other aspects, features, and advantages other than those described above will become apparent from the following detailed description, claims and drawings for carrying out the invention.

[Advantageous effects]

A tracking device, a tracking system including the same, and a tracking method for the tracking device according to an embodiment of the present invention may accurately measure a location of a target object. The tracking device may accurately measure the location of the target object in an x-axis direction and a y-axis direction by using data related to distances between a plurality of positioning nodes of a positioning module and a target node of the target object. In particular, the tracking device may position the target node with high accuracy while preventing an operation for calculating the location of the target node from becoming complicated.

A tracking device, a tracking system including the same, and a tracking method for the tracking device according to an embodiment of the present invention may actively cope with a situation by modifying a route during tracking. When an obstacle is observed by an imaging module, the tracking device may modify the route to perform tracking so that the obstacle disappears. Since the obstacle is in a fixed state, it is possible to change the route to ensure safety and continuously track the target object at the same time.

A tracking device, a tracking system including the same, and a tracking method for the tracking device according to an embodiment of the present invention may ensure safety by suspending driving when a moving object is observed. Unlike a fixed obstacle, since movement of a moving object is difficult to predict, when the moving object is observed by a sensor module, the tracking device suspends driving until the moving object disappears. Accordingly, it is possible to minimize the risk of collision occurring during tracking. It is obvious that the scope of the present invention is not limited by these effects.

[Description of Drawings]

FIG. 1 is a diagram illustrating a tracking system according to an embodiment of the present invention;
FIG. 2 is a diagram illustrating a positioning method according to an embodiment of a positioning module of FIG. 1;
FIG. 3 is a diagram illustrating a positioning method according to another embodiment of the positioning module of FIG. 1;
FIG. 4 is a diagram illustrating a positioning method according to still another embodiment of the positioning module of FIG. 1;
FIG. 5 is a diagram illustrating driving of an imaging module of FIG. 1;
FIG. 6 is a diagram illustrating driving of a sensor module of FIG. 1;
FIG. 7 is a flowchart illustrating a tracking method for a tracking device according to another embodiment of the present invention;
FIG. 8 is a flowchart specifically describing the tracking method for the tracking device of FIG. 7; and
FIGs. 9 to 11 are graphs illustrating performance data of the tracking system of FIG. 1.

[Mode for Invention]

Hereinafter, various embodiments of the present disclosure are described in connection with the accompanying drawings. Various embodiments of the present disclosure may be variously changed and may have various embodiments. Further, specific embodiments are illustrated in the drawings, and a related detailed description is given. However, this is not intended to limit the various embodiments of the present disclosure to the specific embodiments, and it should be understood that all modifications and/or equivalents or substitutes included in the spirit and scope of the various embodiments of the present disclosure are included therein. In connection with the description of the drawings, like reference numerals have been used for like components.

An expression such as "include" or "may include" that may be used in various embodiments of the present disclosure indicates the presence of a disclosed corresponding function, operation, or component, and does not limit one or more additional functions, operations, or components, etc. In addition, in various embodiments of the present disclosure, it should be understood that a term such as "include" or "have" is intended to designate that the features, numbers, steps, operations, components, parts, or combinations thereof described in the specification are present, and does not preclude the possibility of addition or presence of one or more other features, numbers, steps, operations, components, parts, or combinations thereof.

In various embodiments of the present disclosure, an expression such as "or" includes any and all combinations of words listed together. For example, "A or B" may include A, may include B, or may include both A and B.

In various embodiments of the present disclosure, an expression such as "first," "second, " "number one, " or "number two" may modify various components of various embodiments, but do not limit those components. For example, the above expression does not limit the order and/or importance of corresponding components. The above expression may be used to distinguish one component from another. For example, a first user device and a second user device are both user devices, and indicate different user devices. For example, without departing from the scope of the various embodiments of the present disclosure, a first component may be referred to as a second component, and similarly, the second component may also be referred to as the first component.

When a component is referred to as being "coupled" or "connected" to another component, the component may be directly coupled or connected to the other component. However, it should be understood that another new component may be present between the component and the other component. In contrast, when a component is referred to as being "directly coupled" or "directly connected" to another component, it should be understood that there are no other components between the component and the other component.

The terminology used in various embodiments of the present disclosure is only used to describe one specific embodiment, and is not intended to limit the various embodiments of the present disclosure. A singular expression includes the plural form unless the context clearly dictates otherwise.

Unless defined otherwise, all terms used herein, including technical or scientific terms, have the same meaning as those commonly understood by one of ordinary skill in the art to which various embodiments of the present disclosure pertain.

Terms such as those defined in a commonly used dictionary should be interpreted as having meanings consistent with the meanings in the context of the related art, and unless explicitly defined in various embodiments of the present disclosure, the terms are not to be construed in an idealistic or overly formal sense.

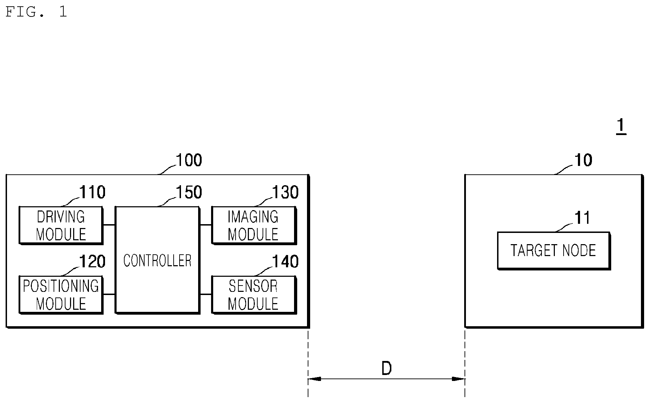

FIG. 1 is a diagram illustrating a tracking system 1 according to an embodiment of the present invention.

Referring to FIG. 1, the tracking system 1 includes a moving target object 10 and a tracking device 100 that moves by tracking the target object 10.

The target object 10 is a movable object to be tracked, and may be set in various ways. As an example, the target object 10 may be a device such as a movable robot or a vehicle having a target node 11. In addition, the target node 11 of the target object 10 may be attached to a human, an animal, etc.

The target node 11 may measure a distance by receiving a signal from a positioning module 120 of the tracking device 100. By measuring a distance between the target node 11 and the positioning node, it is possible to accurately measure a location of the target object 10, that is, the target node 11. The target node 11 is not limited to a specific component that can measure the distance from the positioning node. For example, the target node 11 may be an RF node.

The tracking device 100 is a device that moves to follow the moving target object 10 and may be set in various ways. As an example, the tracking device 100 may be set as a drivable cart, a robot, etc. However, hereinafter, for convenience of description, the tracking device 100 will be described by focusing on a structure that can move through the driving module 110. The tracking device 100 may include the driving module 110, the positioning module 120, an imaging module 130, a sensor module 140, and a controller 150.

The driving module 110 is installed in a main body, and provides mobility to the tracking device 100. That is, the driving module 110 may move the main body of the tracking device 100. Although not illustrated in the drawings, the driving module 110 may include wheels, a driving shaft, a driving motor, etc., and a speed of the driving module 110 may be adjusted or the driving module 110 may be stopped by a control signal from the controller 150.

The positioning module 120 is installed in the main body, and may measure the distance between the target object and the tracking device. The positioning module 120 has a plurality of positioning nodes, and may measure distances between the plurality of positioning nodes and the target node 11. The controller 150 may accurately measure the location of the target node 11 by using the distance data.

The positioning nodes may be arranged such that distances between at least two neighboring positioning nodes are equal to each other. In addition, three positioning nodes may have an arrangement of a right-angled isosceles triangle.

The imaging module 130 may photograph the target object 10 and a surrounding environment while moving. The imaging module 130 may be installed on one side of the tracking device 100, capture an image of the surroundings of the tracking device 100, and provide a captured image to the controller 150. In particular, when an image of an obstacle FO placed on a tracking route is captured by the imaging module 130, the controller 150 may correct an existing tracking route.

The imaging module 130 may determine that a fixed obstacle FO is located in the vicinity while moving along a first route that is a preset movement route. Based on data received from the imaging module 130, the controller 150 sets a modified second route avoiding the obstacle FO. Thus, the tracking device 100 may continuously and actively track the target object 10 by considering the surrounding environment.

The sensor module 140 may sense an area in front of the main body to sense a moving object MO between the target object 10 and the main body. That is, the sensor module 140 may sense an object moving forward during a tracking process. In one embodiment, the sensor module 140 may be an ultrasonic sensor.

The sensor module 140 may improve safety of the tracking device 100 by recognizing an abrupt change in the situation during the tracking process. Unlike the fixed obstacle FO, movement of the moving object MO is unpredictable. Thus, when the moving object MO is sensed by the sensor module 140, the controller 150 stops the driving module 110. Thereafter, when the moving object MO is no longer sensed, the controller 150 resets a route so that the tracking device 100 tracks the target object 10.

The controller 150 is electrically connected to the driving module 110, the positioning module 120, the imaging module 130, and the sensor module 140, and may control the modules. The controller 150 may receive data from the positioning module 120, the imaging module 130, and the sensor module 140 to set a route and control driving of the driving module 110.

The controller 150 may receive data related to a distance from the target node from positioning nodes having a triangular arrangement and calculate location information of the target node 11.

As an embodiment, in the tracking system 1, a distance D between the target object 10 and the tracking device 100 may be maintained at a constant value. In detail, the tracking device 100 may be set to have a preset first route to maintain a distance D from the target object 10. When the tracking device 100 measures the obstacle FO or the moving object MO, the tracking device 100 modifies the first route to set a second route. However, when the obstacle FO or the moving object MO is removed thereafter, the first route may be set again.

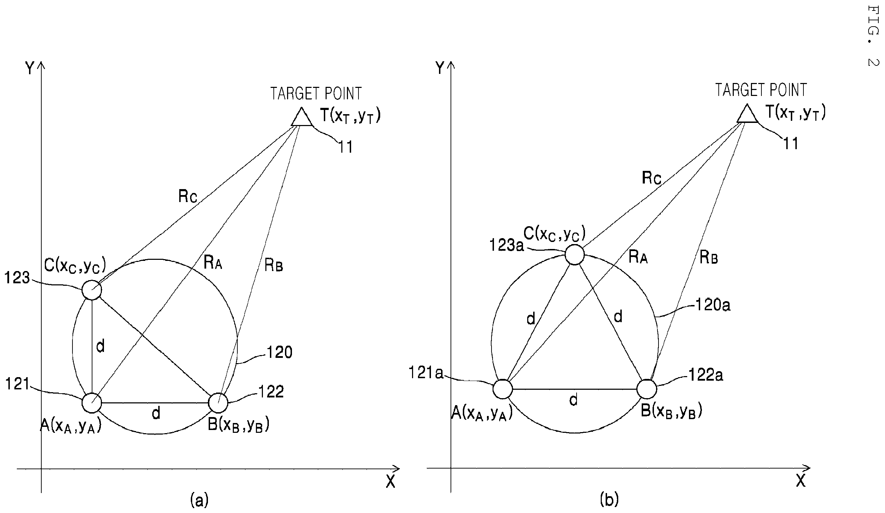

FIG. 2 is a diagram illustrating a positioning method according to an embodiment of the positioning module 120 of FIG. 1.

Referring to FIG. 2, the positioning module 120 may include a first positioning node 121, a second positioning node 122, and a third positioning node 123. The positioning nodes may have an arrangement of a right-angled isosceles triangle as illustrated in FIG. 2(a), or may have an arrangement of an equilateral triangle as illustrated in FIG. 2(b).

Referring to FIG. 2(a), the positioning module 120 may have a right-angled isosceles triangle structure in which the second positioning node 122 and the third positioning node 123 are located in directions perpendicular to each other with respect to the first positioning node 121.

In this case, when the location of the target node 11 is calculated based on the first positioning node 121, the location may be expressed as the following Equation 1.

[Equation 1]

$$\frac{R_A^2 - R_B^2 + d^2}{2d} = x_{TA},$$

$$\frac{R_A^2 - R_C^2 + d^2}{2d} = y_{TA}.$$

$X_{TA}$ denotes a first distance from the first positioning node 121 to the target node 11 on a first axis (= X-axis) connecting the first positioning node 121 to the second positioning node 122. That is, $X_{TA}$ is defined as the first distance between the first positioning node 121 and the target node 11 in an X-axis direction.

$Y_{TA}$ denotes a second distance from the first positioning node 121 to the target node 11 on a second axis (= Y-axis) connecting the first positioning node 121 to the third positioning node 123. That is, $Y_{TA}$ is defined as the second distance between the first positioning node 121 and the target node 11 in a Y-axis direction.

d denotes a distance between the first positioning node 121 and the second positioning node 122 or a distance between the first positioning node 121 and the third positioning node 123.

As can be seen in Equation 1, the first distance $X_{TA}$ in the X-axis direction may be calculated without considering location (distance) information $Y_T$ on the Y-axis of the target node 11, and the second distance $Y_{TA}$ may be calculated without considering location (distance) information $X_T$ on the X-axis of the target node 11.

In the tracking system 1 and the tracking device 100 according to an embodiment of the present invention, the second positioning node 122 and the third positioning node 123 are disposed to form a right-angled isosceles triangle structure by being located in directions perpendicular to each other with respect to the first positioning node 121, so that values of the X-axis and the Y-axis do not affect each other (decoupling).

Equation 1 described above illustrates an embodiment in which the tracking device 100 tracks the target object 10 in a two-dimensional plane. However, when the number of dimensions increases to, for example, three, the operation of measuring the location becomes complicated. In addition, Equation 1 describes that the tracking device 100 calculates a location of one target object 10. However, in a situation where other target objects are additionally linked, calculating a location of each target object is complicated.

In the positioning module 120 according to an embodiment of the present invention, the distance (= $R_A$) from the first positioning node 121 to the target node 11 is commonly considered in obtaining $X_{TA}$ and $Y_{TA}$. However the distance (= $R_B$) from the second positioning node 122 to the target node 11 is considered only in obtaining $X_{TA}$, and the distance (= $R_C$) from the third positioning node 123 to the target node 11 is considered only in obtaining $Y_{TA}$. Accordingly, the values of the X-axis and the Y-axis do not affect each other (decoupling), and thus the positioning module 120 may calculate the first distance $X_{TA}$ and the second distance $Y_{TA}$ through a simpler operation. Accordingly, the positioning module 120 may concisely model formulas for calculating the first distance $X_{TA}$ and the second distance $Y_{TA}$, and may effectively reduce the amount of calculation required therefor.

The tracking system 1 and the tracking device 100 according to an embodiment of the present invention may calculate the distances ($R_A$, $R_B$, $R_C$) to the target node 11 by the plurality of positioning nodes transmitting and receiving an RF signal to and from the target node 11, and the controller 150 may accurately calculate relative location of the target object 10 with respect to the tracking device 100 using the distance.

For example, the plurality of positioning nodes may calculate the distance from the target node 11 using ToF (Time of Flight), etc. while transmitting and receiving an RF signal to and from the target node 11. However, the present invention is not limited thereto, and it is possible to calculate the distance between the positioning node and the target node 11 by applying various techniques such as phase shift or frequency modulation.

Referring to FIG. 2(b), a first positioning node 121a, a second positioning node 122a, and a third positioning node 123a may be disposed in the positioning module 120 in the form of an equilateral triangle. The positioning module 120 calculates the distances (= $R_A$, $R_B$, $R_C$) from the first positioning node 121a, the second positioning node 122a, and the third positioning node 123a to the target node 11 provided in the target object 10, respectively, and then calculates the location of the target node 11 with respect to the first positioning node 121a using the distances, which may be expressed as the following Equation 2.

[Equation 2]

$$x_{TA} = \frac{R_A^2 - R_B^2 + d^2}{2d},$$

$$y_{TA} = \frac{R_A^2 - R_C^2 + d^2}{\sqrt{3}d} - \frac{1}{\sqrt{3}}x_T.$$

$X_{TA}$ denotes a first distance from the first positioning node 121a to the target node 11 on a first axis (= X-axis) connecting the first positioning node 121a to the second positioning node 122a. That is, $X_{TA}$ is defined as the first distance between the first positioning node 121a and the target node 11 in an X-axis direction.

$Y_{TA}$ denotes a second distance from the first positioning node 121a to the target node 11 on a second axis (= Y-axis) connecting the first positioning node 121a to the third positioning node 123a. That is, $Y_{TA}$ is defined as the second distance between the first positioning node 121a and the target node 11 in a Y-axis direction.

d denotes a distance among the first positioning node 121a, the second positioning node 122a, and the third positioning node 123a.

As can be seen in Equation 2, in order to obtain the second distance $Y_{TA}$, a value of a location $X_T$ of the target node 11 on the X-axis is considered.

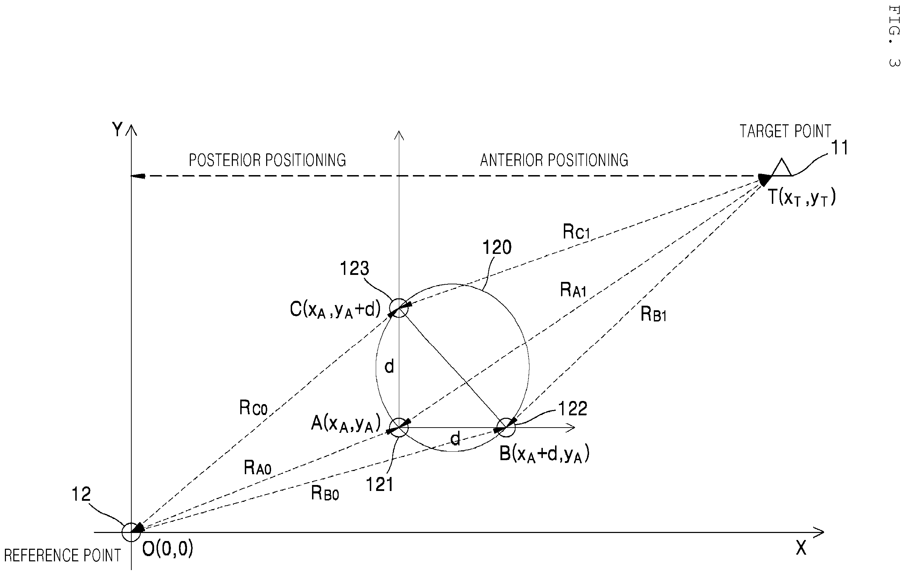

FIG. 3 is a diagram illustrating a positioning method according to another embodiment of the positioning module 120 of FIG. 1.

Referring to FIG. 3, the tracking device 100 may calculate an absolute location of the target object 10 with respect to a predetermined reference point O in consideration of location information of the tracking device 100.

The positioning module 120 may transmit and receive an RF signal to and from a reference node 12 provided at the reference point O, calculate a distance between each positioning node and the reference node 12, and calculate location information of the tracking device 100 with reference to the reference node 12. Subsequently, the positioning module 120 may calculate location information of the target object 10 with respect to the tracking device 100, and finally calculate an absolute location of the target object 10 with respect to the reference point O.

In detail, a location of the reference node 12 at the reference point O may be measured and stored in advance. Accordingly, the positioning module 120 may transmit and receive an RF signal from the first positioning node 121, the second positioning node 122, and the third positioning node 123 to the reference node 12, calculate distances (= $R_{A0}$, $R_{B0}$, $R_{C0}$) from the first positioning node 121, the second positioning node 122, and the third positioning node 123 to the reference node 12, respectively, and then calculate locations of the first positioning node 121, the second positioning node 122, and the third positioning node 123 using the location of the reference node 12.

Furthermore, when the locations of the first positioning node 121, the second positioning node 122, and the third positioning node 123 are calculated, the positioning module 120 may calculate $T(X_T, Y_T)$, which is a location of the target node 11 with respect to the location of the reference node 12, in consideration of the location information of the target object 10 with respect to the tracking device 100.

As another embodiment, using the above Equation 1, the positioning module 120 may calculate a distance between the reference node 12 and the first positioning node 121 in the X-axis direction, and calculate a distance between the reference node 12 and the first positioning node 121 in the Y-axis direction. Thereafter, using the above Equation 1, it is possible to calculate a distance between the target node 11 and the first positioning node 121 in the X-axis direction, and calculate a distance between the target node 11 and the first positioning node 121 in the Y-axis direction. Thereafter, the controller 150 may calculate measured data to calculate $T(X_T, Y_T)$, which is the location of the target node 11 with respect to the location of the reference node 12.

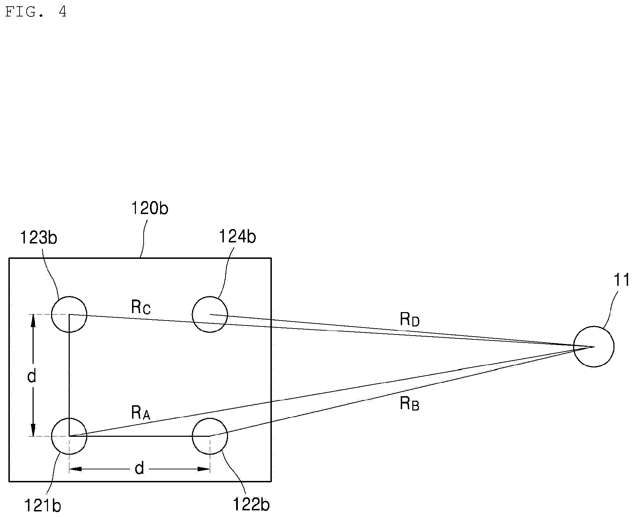

FIG. 4 is a diagram illustrating a positioning method according to another embodiment of a positioning module 120b of FIG. 1.

Referring to FIG. 4, in the positioning module 120b, four positioning nodes may have a square arrangement. A first positioning node 121b, a second positioning node 122b, a third positioning node 123b, and a fourth positioning node 124b may have a square arrangement in which each of horizontal and vertical distances is d.

The positioning module 120b may measure a distance $R_A$ between the target node 11 and the first positioning node 121b, a distance $R_B$ between the target node 11 and the second positioning node 122b, a distance $R_C$ between the target node 11 and the third positioning node 123b, and a distance $R_D$ between the target node 11 and the fourth positioning node 124b.

The controller 150 may measure a distance between any one positioning module and the target node 11 according to the above-described method by using distance data calculated by the positioning module 120b. For example, the controller may use data measured by the first positioning node 121b, the second positioning node 122b, and the third positioning node 123b to measure the distance between the first positioning node 121b and the target node 11. In addition, the controller 150 may use data measured by the second positioning node 122b, the third positioning node 123b, and the fourth positioning node 124b to measure the distance between the fourth positioning node 124b and the target node 11.

In the tracking system 1 and the tracking device 100 according to the present invention, the positioning module 120b may have an extra degree of freedom, so that the location of the target object 10 may be accurately measured and checked. That is, by selecting each of a plurality of pieces of distance data, location information of the target object 10 may be calculated in a different manner according to selection. Accuracy may be improved by calculating and modifying the location of the target object 10 by using location information of the target object 10 calculated by a plurality of methods.

In the tracking system 1 and the tracking device 100 according to the present invention, the positioning module 120b may have an extra degree of freedom. Thus, even when there is an error in some positioning nodes of the positioning module 120b, the location of the target object 10 may be accurately measured using distance data measured at another positioning node. For example, when the first positioning node 121b has an error, the location of the target object 10 may be calculated using the second to fourth positioning nodes 122b, 123b, and 124b.

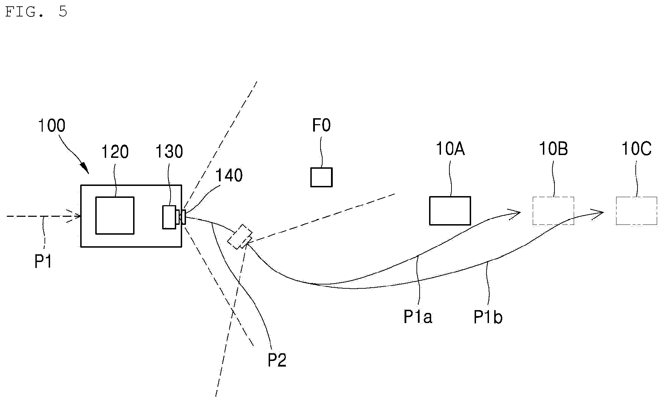

FIG. 5 is a diagram illustrating driving of the imaging module 130 of FIG. 1.

Referring to FIG. 5, when the tracking device 100 observes an obstacle FO using the imaging module 130, the controller 150 modifies a preset first route to a second route. Thereafter, when the obstacle FO disappears from the imaging module 130, the controller 150 returns to the first route again.

The tracking device 100 is controlled by the controller 150 so that the tracking device 100 tracks the target object 10 along the first route P1.

When an image of an obstacle FO fixed between the target object 10 and the main body is captured by the imaging module 130, the controller 150 modifies the preset first route PI, and drives the driving module along the second route P2 to avoid the obstacle FO. That is, the controller 150 changes a steering direction of the driving module 110 so that an image of the obstacle FO is no longer captured by the imaging module 130.

When the obstacle FO is removed from the data measured by the imaging module 130, the controller 150 drives the driving module 110 along the first route again. In this case, it is assumed that the location of the target object is changed from 10A to 10B.

In one embodiment, the controller 150 may be set to a route of P1a. That is, based on a location of the target object 10B at a point in time when the obstacle FO is no longer observed, the controller 150 may reset the optimal first route P1a.

In another embodiment, the controller 150 may be set to a route of P1b. In detail, the controller 150 calculates a location of 10C, which is a location to which the target object moves after a predetermined time, based on information about movement of the target object 10 from 10A to 10B at a point in time when the obstacle FO is no longer observed. Thereafter, the controller 150 may reset the optimal first route 1b by predicting that the target object will be moved to the location 10C.

The imaging module 130 may recognize the obstacle FO from a plurality of consecutively photographed frames. While the tracking device 100 is moving, the imaging module 130 continuously captures images of a front area. The controller 150 may compare the plurality of frames to detect whether a location of a specific object changes, and may recognize the specific object as a fixed obstacle FO when the location of the specific object does not change.

The tracking system 1 and the tracking device 100 according to an embodiment of the present invention may use image data acquired by the imaging module 130 to detect the obstacle FO placed in a front area while the target object 10 is being tracked, and rapidly avoid the obstacle FO. Since the location of the fixed obstacle FO does not change, the tracking device 100 may change the tracking route without stopping to actively respond to the situation.

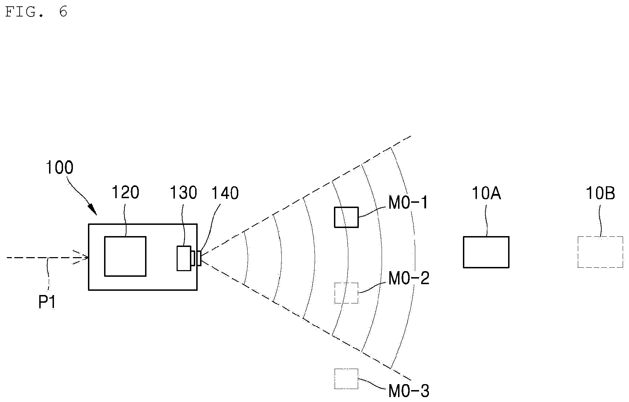

FIG. 6 is a diagram illustrating driving of the sensor module 140 of FIG. 1.

Referring to FIG. 6, when the sensor module 140 senses a moving object, the tracking device 100 stops the driving module. Thereafter, when the moving object MO is removed from data measured by the sensor module 140, that is, when the sensor module 140 senses that there is no moving object MO in a front area, the controller may move the driving module 110 along the first route again.

The sensor module 140 senses the front area of the tracking device 100. The sensor module 140 may sense the presence or absence of the moving object MO in a space between the target object and the tracking device 100.

As an example, the sensor module 140 may include an ultrasonic sensor. The sensor module 140 may measure a wavelength reflected from the moving object MO to determine whether the moving object MO is present in the front area.

Since the tracking device 100 cannot predict a moving line of the moving object MO, when the moving object MO is identified by the sensor module 140, the controller 150 stops the driving module 110. Since the tracking device 100 is stopped, it is possible to prevent an accident in which the tracking device 100 collides with the moving object MO while driving.

The sensor module 140 has a predetermined measurement radius, and even when the moving object MO moves from MO-1 to M0-2 as illustrated in FIG. 6, it is recognized that the moving object MO is present in the front area.

Thereafter, when the moving object MO moves to MO-3, and thus the moving object MO is not sensed by the sensor module 140, the controller 150 drives the driving module 110 along the first route P1 again. Since the target object moves from 10A to 10B while the tracking device 100 is stopped, the controller 150 increases the rotation speed of the driving module 110 so that the tracking device 100 may maintain a predetermined distance D from the target object 10.

In another embodiment, the sensor module 140 may measure the moving object MO in successive frames measured by the imaging module 130.

The tracking system 1 and the tracking device 100 according to an embodiment of the present invention may use data measured by the sensor module 140 to recognize the moving object MO in the front area while the target object 10 is tracked, and may stop the tracking device 100 until the moving object MO disappears to increase safety of the tracking device 100.

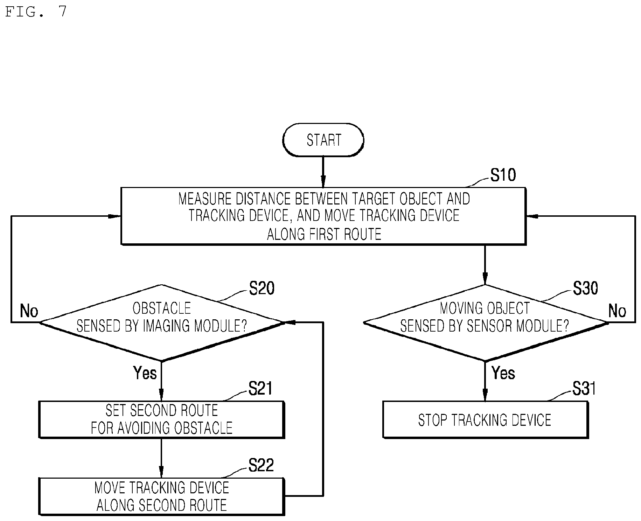

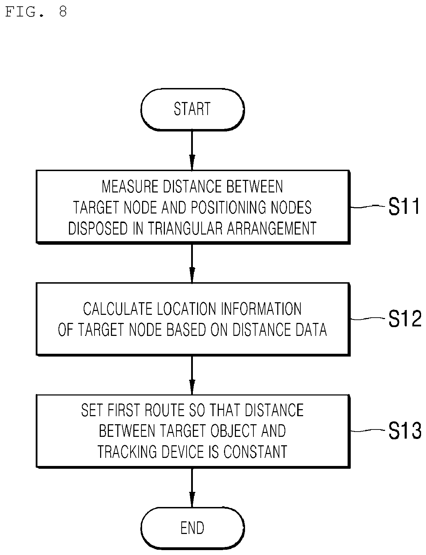

FIG. 7 is a flowchart illustrating a tracking method for a tracking device according to another embodiment of the present invention, and FIG. 8 is a flowchart specifically describing the tracking method for the tracking device of FIG. 7.

Referring to FIGs. 7 and 8, the tracking method for the tracking device includes a step of measuring a distance between a target object and the tracking device by the positioning module and moving the tracking device along a first route set by a controller, a step of setting, by the controller, a second route for avoiding an obstacle by modifying the first route when the imaging module senses the obstacle between the target object and the tracking device, a step of moving the tracking device along the second route by the controller, and a step of moving, by the controller, the tracking device along the first route again when the obstacle is removed from data measured by the imaging module.

In addition, the tracking method for the tracking device may further include a step of stopping the tracking device by the controller when the sensor module senses a moving object between the target object and the tracking device, and a step of moving, by the controller, the tracking device along the first route again when the moving object is removed from data measured by the sensor module.

In the tracking method for the tracking device, the distance between the moving target object and the tracking device is measured, and the tracking device moves along the first route (S10). As described above, the exact location of the target node 11 is measured based on distance information between the target node 11 of the target object 10 and the positioning nodes of the positioning module 120. Thereafter, the controller 150 sets the first route and controls the driving module 110 so that the tracking device moves along the first route.

The imaging module senses whether there is an obstacle in the front area (S20). The imaging module 130 analyzes an image frame and senses whether a fixed obstacle FO is present between the tracking device 100 and the target object 10.

When it is determined that there is an obstacle, a second route for avoiding the obstacle is set (S21). The controller 150 modifies the route of the tracking device 100 from the first route to the second route so that the obstacle FO is not observed by the imaging module 130.

The tracking device moves along the second route (S22). The controller 150 steers and drives the driving module 110 so that the tracking device 100 moves along the second route.

The imaging module 130 continuously acquires images, and when it is confirmed that there is no obstacle by the imaging module 130, the controller 150 drives the tracking device 100 along the first route again.

The sensor module senses the presence or absence of a moving object in the front area (S30) . When it is confirmed that there is a moving object by the sensor module, the tracking device stops (S31) . Since a moving line of the moving object MO is unpredictable, the tracking device 100 stops for safety thereof.

The sensor module 140 continuously senses a front object, and when it is confirmed that there is no moving object MO by the sensor module 140, the controller 150 drives the tracking device 100 along the first route again.

In addition, in the tracking method for the tracking device, the step of moving the tracking device along the first route includes a step of disposing a plurality of positioning nodes of the positioning module in a triangular arrangement, and measuring a distance between each of the positioning nodes and a target node of the target object (S11), a step of calculating location information of the target node based on data related to the distance between the positioning node and the target node (S12), and a step of setting the first route so that a distance between the target object and the tracking device is constant based on location information of the tracking device and location information of the target object (S13).

The tracking method for the tracking device according to an embodiment of the present invention may accurately measure the location of the target object by the positioning module. In addition, it is possible to recognize a fixed obstacle by the imaging module and actively cope with the obstacle by modifying the route to avoid the obstacle. In addition, by recognizing a moving object by the sensor module, and stopping the tracking device until the moving object disappears, safety may be improved.

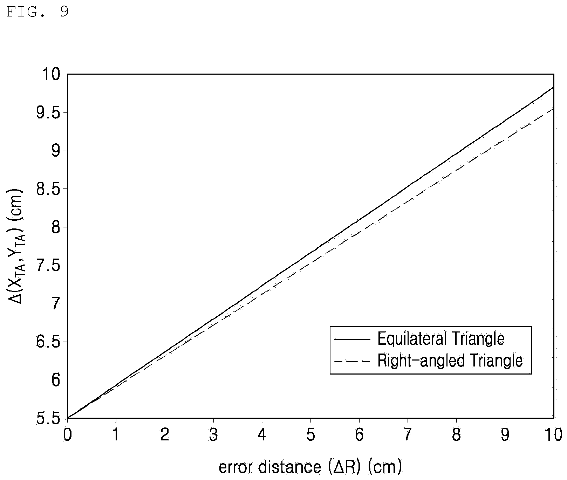

FIGs. 9 to 11 are graphs illustrating performance data of the tracking system 1 of FIG. 1.

Referring to FIG. 9, when positioning accuracy according to a distance measurement error is examined, it can be seen that the positioning module of the tracking device 100 exhibits a linearly increasing proportional relationship in both the case where a plurality of positioning nodes is disposed in a right-angled triangle shape and the case where the plurality of positioning nodes is disposed in an equilateral triangle shape.

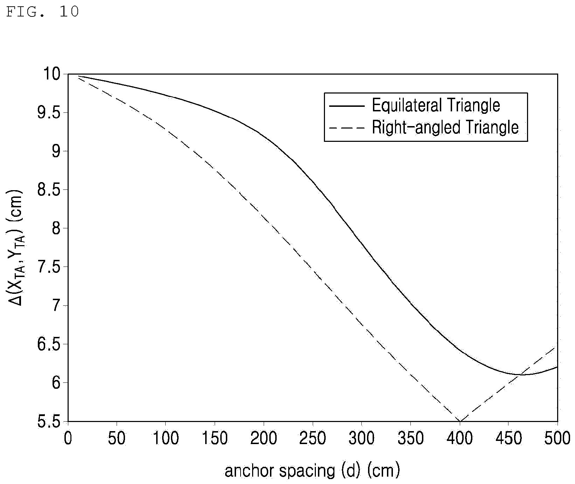

Referring to FIG. 10, when positioning accuracy according to a distance d of the positioning node is examined, the positioning module of the tracking device 100 exhibits higher accuracy in the case where the plurality of positioning nodes is disposed in the right-angled triangle shape than in the case where the plurality of positioning nodes is disposed in the equilateral triangle shape. In addition, it can be seen that a linearly inversely proportional relationship is exhibited in the case of the right-angled triangle shape, whereas a non-linearly inversely proportional relationship is exhibited in the case of the equilateral triangle shape.

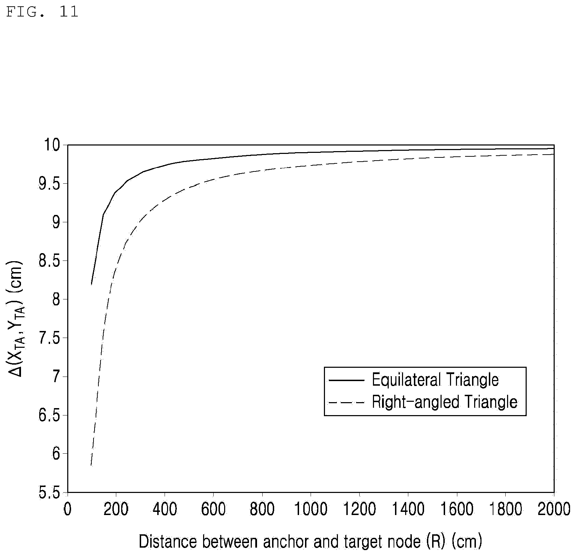

Referring to FIG. 11, when positioning accuracy according to the distance between the tracking device 100 and the target object 10 is examined, it can be seen that the positioning module of the tracking device 100 exhibits higher accuracy in the case where the plurality of positioning nodes is disposed in the right-angled triangle shape than in the case where the plurality of positioning nodes is disposed in the equilateral triangle shape.

Accordingly, the tracking system 1, the tracking device 100, and the tracking method according to an embodiment of the present invention may accurately measure the location of the target node 11 of the target object 10 without installing a plurality of positioning nodes in a region for positioning in advance. In addition, the tracking system 1, the tracking device 100, and the tracking method may measure the location of the target node 11 with high accuracy while preventing an operation for calculating the location of the target node 11 from becoming complicated.

The present invention has been described with reference to the embodiments illustrated in the drawings, which are merely illustrative, and those skilled in the art will understand that various modifications and other equivalent embodiments are possible therefrom. Therefore, the true technical protection scope of the present invention should be determined by the technical spirit of the appended claims.

Meanwhile, the present invention is supported by the national R & D project described below.

Task 1)

[Project unique number] 2019010015

[Government department name] Ministry of Science and ICT
[Research Management Specialized Institution] Daegu Gyeongbuk Institute of Science and Technology
[Research project name] Real-time indoor wide-area positioning technology development
[Research task name] Real-time indoor wide-area positioning technology development
[Supervising institution] Daegu Gyeongbuk Institute of Science and Technology
[Research period] January 1, 2019 to December 31, 2019

Task 2)

[Project unique number] 2019010014
[Government department name] Ministry of Science and ICT
[Research Management Specialized Institution] Daegu Gyeongbuk Institute of Science and Technology
[Research project name] Future automobile demand technology development and commercialization
[Research task name] Future automobile demand technology development and commercialization
[Supervising institution] Daegu Gyeongbuk Institute of Science and Technology
[Research period] January 1, 2019 to December 31, 2019

Task 3)

[Project unique number] 2020010082
[Government department name] Ministry of Science and ICT
[Research Management Specialized Institution] Daegu Gyeongbuk Institute of Science and Technology
[Research project name] Human information processing core technology research for human-robot augmented exchange
[Research task name] Human information processing core technology research for human-robot augmented exchange
[Supervising institution] Daegu Gyeongbuk Institute of Science and Technology
[Research period] January 1, 2020 to December 31, 2020

[Industrial Applicability]

A tracking device, a tracking system including the same, and a tracking method for the tracking device according to an embodiment of the present invention have remarkable industrial applicability in that a location of a target node may be measured with high accuracy while preventing an operation of calculating the location of the target node by the tracking device from becoming complicated.

**Claims**

1. A tracking device for tracking a moving target object, the tracking device comprising:

a driving module configured to move a main body;
a positioning module installed on the main body and configured to measure a distance between the target object and the tracking device;
an imaging module configured to capture an image of the target object or a surrounding environment while moving;
a sensor module configured to sense an area in front of the main body and to sense a moving object between the target object and the main body; and
a controller configured to receive data from the positioning module, the imaging module, and the sensor module, set a route of the driving module, and control driving, wherein:

the positioning module includes a plurality of positioning nodes, and each of the positioning nodes measures a distance from a target node mounted on the target object;
the plurality of positioning nodes includes a first positioning node, a second positioning node, and a third positioning node, and the second positioning node and the third positioning node are located in directions perpendicular to each other with respect to the first positioning node to have an arrangement of a right-angled isosceles triangle;
the plurality of positioning nodes further includes a fourth positioning node having a square arrangement with the first positioning node, the second positioning node, and the third positioning node; and
the controller measures a distance from the target node using three of the first positioning node, the second positioning node, the third positioning node, and the fourth positioning node, and checks and modifies the measured distance at least once using three positioning nodes including the remaining positioning node.

2. The tracking device according to claim 1, wherein, when the imaging module captures an image of an obstacle between the target object and the main body, the controller modifies a preset first route to drive the driving module along a second route for avoiding the obstacle.

3. The tracking device according to claim 1, wherein the controller drives the driving module along a first route set based on data measured by the positioning module, and stops the driving module when the sensor module senses the moving object.

4. The tracking device according to claim 3, wherein, when the moving object is removed from data measured by the sensor module, the controller drives the driving module along the first route again.

5. The tracking device according to claim 1, wherein the controller drives the driving module along a first route such that a distance between the target object and the tracking device is maintained constant based on data measured by the positioning module, drives the driving module along a route different from the first route based on information related to an obstacle received from the imaging module or information related to a moving object received from the sensor module, and drives the driving module along the first route again when the obstacle or the moving object is removed.

6. A tracking system comprising:

a target object having a target node; and
a tracking device configured to track the target object, wherein:
the tracking device includes:

a driving module configured to move a main body;
a positioning module installed on the main body and configured to measure a distance between the target object and the tracking device;
an imaging module configured to capture an image of the target object or a surrounding environment while moving;
a sensor module configured to sense an area in front of the main body and to sense a moving object between the target object and the main body; and
a controller configured to receive data from the positioning module, the imaging module, and the sensor module, set a route of the driving module, and control driving,
the positioning module includes a plurality of positioning nodes, and each of the positioning nodes measures a distance from a target node mounted on the target object,
the plurality of positioning nodes includes a first positioning node, a second positioning node, and a third positioning node, and the second positioning node and the third positioning node are located in directions perpendicular to each other with respect to the first positioning node to have an arrangement of a right-angled isosceles triangle, the plurality of positioning nodes further includes a fourth positioning node having a square arrangement with the first positioning node, the second positioning node, and the third positioning node, and
the controller measures a distance from the target node using three of the first positioning node, the second positioning node, the third positioning node, and the fourth positioning node, and checks and modifies the measured distance at least once using three positioning nodes including the remaining positioning node.

7. A tracking method for a tracking device, the tracking method comprising:

a step of measuring a distance between a target object and the tracking device by a positioning module and moving the tracking device along a first route set by a controller;
a step of setting, by the controller, a second route for avoiding an obstacle by modifying the first route when an imaging module senses the obstacle between the target object and the tracking device;
a step of moving the tracking device along the second route by the controller; and
a step of moving, by the controller, the tracking device along the first route again when the obstacle is removed from data measured by the imaging module, wherein:

the positioning module includes a plurality of positioning nodes, and each of the positioning nodes measures a distance from a target node mounted on the target object;
the plurality of positioning nodes includes a first positioning node, a second positioning node, and a third positioning node, and the second positioning node and the third positioning node are located in directions perpendicular to each other with respect to the first positioning node to have an arrangement of a right-angled isosceles triangle;
the plurality of positioning nodes further includes a fourth positioning node having a square arrangement with the first positioning node, the second positioning node, and the third positioning node; and
the controller measures a distance from the target node using three of the first positioning node, the second positioning node, the third positioning node, and the fourth positioning node, and checks and modifies the measured distance at least once using three positioning nodes including the remaining positioning node.

8. The tracking method according to claim 7, further comprising:

a step of stopping the tracking device by the controller when the sensor module senses a moving object between the target object and the tracking device; and
a step of moving, by the controller, the tracking device along the first route again when the moving object is removed from data measured by the sensor module.

9. The tracking method according to claim 7, wherein the step of moving the tracking device along the first route includes:

a step in which a plurality of positioning nodes of the positioning module is disposed in a triangular arrangement, and a distance between each of the positioning nodes and the target node of the target object is measured;
a step of calculating location information of the target node based on data related to a distance between the positioning node and the target node; and
a step of setting the first route such that a distance between the target object and the tracking device is maintained constant based on location information of the tracking device and location information of the target object.

FIG. 1

FIG. 2

FIG. 3

FIG. 4

FIG. 5

FIG. 6

FIG. 7

```
                        ┌──────────┐
                        │  START   │
                        └────┬─────┘
                             │
                             ▼                                    ┌─S10
        ┌────────────────────────────────────────────────┐
        │    MEASURE DISTANCE BETWEEN TARGET OBJECT AND   │
   ┌───►│    TRACKING DEVICE, AND MOVE TRACKING DEVICE    │◄───┐
   │    │              ALONG FIRST ROUTE                  │    │
   │    └───────────────┬────────────────────────┬───────┘    │
   │                    │                         │            │
   │         ┌─S20      ▼                         ▼    ┌─S30    │
   │       ╱───────────────╲                ╱───────────────╲  │
   │ No  ╱    OBSTACLE       ╲            ╱  MOVING OBJECT     ╲ No
   └────◄  SENSED BY IMAGING  ►          ◄ SENSED BY SENSOR    ►┘
        ╲    MODULE?        ╱            ╲    MODULE?         ╱
          ╲───────────────╱                ╲───────────────╱
                │ Yes                            │ Yes
                ▼          ┌─S21                 ▼        ┌─S31
        ┌───────────────┐                ┌───────────────┐
        │ SET SECOND ROUTE│               │ STOP TRACKING │
        │ FOR AVOIDING    │               │    DEVICE     │
        │   OBSTACLE      │               └───────────────┘
        └───────┬─────────┘
                ▼          ┌─S22
        ┌───────────────┐
        │ MOVE TRACKING  │
        │ DEVICE ALONG   │
        │ SECOND ROUTE   │
        └────────────────┘
```

FIG. 8

```
                    ┌──────────┐
                    │  START   │
                    └────┬─────┘
                         │
                         ▼
        ┌─────────────────────────────────┐
        │      MEASURE DISTANCE BETWEEN    │
        │  TARGET NODE AND POSITIONING NODES│ ── S11
        │ DISPOSED IN TRIANGULAR ARRANGEMENT│
        └────────────────┬────────────────┘
                         │
                         ▼
        ┌─────────────────────────────────┐
        │     CALCULATE LOCATION INFORMATION│
        │  OF TARGET NODE BASED ON DISTANCE DATA│ ── S12
        └────────────────┬────────────────┘
                         │
                         ▼
        ┌─────────────────────────────────┐
        │     SET FIRST ROUTE SO THAT DISTANCE│
        │        BETWEEN TARGET OBJECT AND │ ── S13
        │      TRACKING DEVICE IS CONSTANT │
        └────────────────┬────────────────┘
                         │
                         ▼
                    ┌──────────┐
                    │   END    │
                    └──────────┘
```

FIG. 9

FIG. 10

FIG. 11

## INTERNATIONAL SEARCH REPORT

| International application No. |
|---|
| **PCT/KR2021/001411** |

### A. CLASSIFICATION OF SUBJECT MATTER

**G06T 7/20**(2006.01)i; **G06T 7/70**(2017.01)i; **G06T 7/50**(2017.01)i; **H04N 5/232**(2006.01)i; **G06K 9/00**(2006.01)i

According to International Patent Classification (IPC) or to both national classification and IPC

### B. FIELDS SEARCHED

Minimum documentation searched (classification system followed by classification symbols)

G06T 7/20(2006.01); A47L 11/40(2006.01); A47L 9/28(2006.01); B25J 11/00(2006.01); B25J 13/08(2006.01); B25J 19/00(2006.01); G01S 19/41(2010.01); G05D 1/02(2006.01); G05D 1/12(2006.01); G06T 7/50(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 추종(tracking), 타겟(target), 이동(moving), 촬상(photographing), 대상체(object), 센싱(sensing), 측위(positioning), 거리(distance), 수직(vertical), 이등변삼각형(isosceles triangle), 배열(array)

### C. DOCUMENTS CONSIDERED TO BE RELEVANT

| Category* | Citation of document, with indication, where appropriate, of the relevant passages | Relevant to claim No. |
|---|---|---|
| A | KR 10-2018-0094329 A (JEJU NATIONAL UNIVERSITY INDUSTRY-ACADEMIC COOPERATION FOUNDATION) 23 August 2018 (2018-08-23)<br>See paragraph [0045]; claims 1, 4-5 and 10-11; and figure 1. | 1-9 |
| A | KR 10-2019-0057880 A (TT&G CO., LTD.) 29 May 2019 (2019-05-29)<br>See paragraph [0059]; claims 1-3 and 6; and figures 4-5. | 1-9 |
| A | KR 10-2010-0086589 A (RESEARCH & BUSINESS FOUNDATION SUNGKYUNKWAN UNIVERSITY) 02 August 2010 (2010-08-02)<br>See paragraphs [0052] and [0058]; and claim 1. | 1-9 |
| A | KR 10-2012-0018247 A (LG ELECTRONICS INC.) 02 March 2012 (2012-03-02)<br>See claims 1 and 9. | 1-9 |
| A | KR 10-2019-0064252 A (LG ELECTRONICS INC.) 10 June 2019 (2019-06-10)<br>See claims 1 and 6. | 1-9 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 April 2021** | **03 May 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
|---|
| **PCT/KR2021/001411** |

**C.     DOCUMENTS CONSIDERED TO BE RELEVANT**

| Category* | Citation of document, with indication, where appropriate, of the relevant passages | Relevant to claim No. |
|---|---|---|
| PX | KR 10-2169922 B1 (DAEGU GYEONGBUK INSTITUTE OF SCIENCE AND TECHNOLOGY) 26 October 2020 (2020-10-26)<br>  See paragraphs [0010]-[0023]; and claims 1-6 and 11-14.<br>  * This document is a published earlier application that serves as a basis for claiming priority of the present international application. | 1-9 |

Form PCT/ISA/210 (second sheet) (July 2019)

**INTERNATIONAL SEARCH REPORT**
Information on patent family members

International application No.

**PCT/KR2021/001411**

| Patent document cited in search report | | | Publication date (day/month/year) | Patent family member(s) | | | Publication date (day/month/year) |
|---|---|---|---|---|---|---|---|
| KR | 10-2018-0094329 | A | 23 August 2018 | KR | 10-1965044 | B1 | 07 August 2019 |
| KR | 10-2019-0057880 | A | 29 May 2019 | CN | 111386504 | A | 07 July 2020 |
| | | | | KR | 10-2038317 | B1 | 30 October 2019 |
| | | | | US | 2019-0155274 | A1 | 23 May 2019 |
| | | | | WO | 2019-103213 | A1 | 31 May 2019 |
| KR | 10-2010-0086589 | A | 02 August 2010 | KR | 10-1060988 | B1 | 01 September 2011 |
| KR | 10-2012-0018247 | A | 02 March 2012 | KR | 10-1666903 | B1 | 17 October 2016 |
| KR | 10-2019-0064252 | A | 10 June 2019 | EP | 3495910 | A1 | 12 June 2019 |
| | | | | KR | 10-2060715 | B1 | 30 December 2019 |
| | | | | US | 10942510 | B2 | 09 March 2021 |
| | | | | US | 2019-0163174 | A1 | 30 May 2019 |
| KR | 10-2169922 | B1 | 26 October 2020 | | None | | |

Form PCT/ISA/210 (patent family annex) (July 2019)